Europäisches Patentamt

European Patent Office

Office européen des brevets

(11) Numéro de publication : **0 278 887 B1**

# (12) FASCICULE DE BREVET EUROPEEN

(45) Date de publication du fascicule du brevet :
**15.04.92 Bulletin 92/16**

(51) Int. Cl.$^5$ : **A61C 8/00**

(21) Numéro de dépôt : **88450002.6**

(22) Date de dépôt : **26.01.88**

(54) **Implant intraosseux pour la fixation de prothèses.**

(30) Priorité : **29.01.87 FR 8701294**

(43) Date de publication de la demande :
**17.08.88 Bulletin 88/33**

(45) Mention de la délivrance du brevet :
**15.04.92 Bulletin 92/16**

(84) Etats contractants désignés :
**AT BE CH DE ES FR GB GR IT LI LU NL SE**

(56) Documents cités :
**EP-A- 0 136 532**
**EP-A- 0 170 818**
**EP-A- 0 256 708**

(56) Documents cités :
**DE-A- 3 326 710**
**FR-A- 2 149 775**
**FR-A- 2 386 303**
**FR-A- 2 571 607**
**GB-A- 1 278 967**

(73) Titulaire : **Benhamou, André**
**50, Allées Jean-Jaurès**
**F-31000 Toulouse (FR)**

(72) Inventeur : **Benhamou, André**
**50, Allées Jean-Jaurès**
**F-31000 Toulouse (FR)**

(74) Mandataire : **Ravina, Bernard**
**Cabinet Bernard RAVINA 24, boulevard Riquet**
**F-31000 Toulouse (FR)**

EP 0 278 887 B1

Jouve, 18, rue Saint-Denis, 75001 PARIS

## Description

La présente invention a pour objet un implant intraosseux pour la fixation de prothèses.

L'implant intraosseux selon l'invention est utilisable dans le domaine animal ou humain et notamment dans ce cas dans le secteur dentaire.

Pour cette raison, l'énoncé de l'art antérieur ainsi que la description qui suivent sont faits par référence avec l'art dentaire sans que cela puisse être considéré comme une limitation du champ d'application de l'invention.

Il est connu pour réaliser des remplacements partiels ou totaux de dents de faire usage d'implants.

Les implants connus sont constitués d'une pièce métallique intégrée dans l'os du maxillaire ou de la mandibule et sur laquelle ou lesquelles sont montées les prothèses.

Deux techniques principales d'implantation sont connues en la matière :
– une technique faisant appel à des implants non enfouissables,
– une technique faisant appel à des implants enfouissables.

Le brevet français FR-A-2 149 775 (ORATRONIC INC) divulgue un implant de type non enfouissable présentant une partie destinée à être logée dans une fente ménagée dans l'os, cette partie ayant la forme d'une lame ajourée de hauteur variable en fonction de la hauteur d'os disponible et d'un ou de plusieurs moignons extérieurs à l'os et à la gencive et destinés à recevoir les prothèses.

Ce type d'implant nécessite la réalisation d'une fente dans l'os, ce qui est un travail délicat.

La largeur de la fente doit être adaptée à celle de la lame pour éviter tout mouvement de l'implant et sa profondeur et la hauteur de la lame doivent être adaptées en fonction de la hauteur d'os disponible. Ce type d'implant présente ou outre l'inconvénient que le ou les moignons extérieurs à l'os et autour desquels la gencive doit être suturée contribuent à une mise en communication de la fente osseuse réalisée pour loger la lame avec l'extérieur. De plus, par sa forme en lame, ce type d'implant présente le risque de s'enfoncer dans l'os.

Le brevet français n° 2 386 303 (EBAUCHES SA) est de ce type non enfouissable.

Il présente une ou deux lames en arc-de-cercle, ce qui suppose une fente de grande dimension ménagée dans l'os et son moignon 18/19 n'est pas séparable de la lame et est extérieur à la fente, ce qui présente les inconvénients mentionnés plus haut pour le brevet FR-A-2 149 775.

La technique faisant appel à des implants enfouis dans l'os présente de nombreux avantages :
– la cicatrisation osseuse est aseptique et atraumatique.
– On relève une absence d'invagination épitheliale et d'interposition de tissus fibreux entre l'os et l'implant.

De plus, cette technique rend possible le port de prothèses amovibles par dessus les implants enfouis pendant la phase de cicatrisation osseuse.

On connaît dans cette technique un implant constitué par un fut à filets de vis extérieurs mis en place dans un puit, taraudé au pas correspondant dans l'os après ouverture de la gencive.

Le fut comporte un canal axial taraudé qui reçoit une vis d'obturation avant fermeture du puit par suture de la gencive. Au terme d'une certaine période dite de mise en nourrice de l'implant au cours de laquelle se réalise la cicatrisation osseuse au contact direct de l'implant, la gencive est à nouveau ouverte, la vis d'obturation est enlevée et un pilier est vissé pour recevoir la prothèse.

Cet implant présente une contrainte de vissage.

En outre, la fixation de la prothèse sur le pilier est complexe.

D'autre part, ce système basé sur un corps d'implant ou racine d'une certaine longueur n'apporte pas de solution à tous les cas d'édentation.

C'est ainsi qu'il est inutilisable dans les régions postérieures des maxillaires où la hauteur osseuse utilisable est moindre du fait d'obstacles anatomiques (canal dentaire à la mandibule ou sinus au maxillaire supérieur).

De ce fait, avec cet implant connu, pour équiper les zones postérieures du maxillaire, il est nécessaire de prendre appui sur un implant placé en région antérieure du maxillaire en réalisant une prothèse en porte à faux.

Les brevets EP-A-0.170.818, FR-A-2571607 et EP-A-0 256 708 décrivent des implants constitués d'un fut destiné à être introduit dans un puit creux dans l'os maxillaire.

Dans le premier cas, le fut est doté d'un pas de vis sur toute son hauteur pour réaliser son blocage avec l'os maxillaire.

Dans le deuxième cas, le fut est doté de rainures et nervures horizontales sur toute sa hauteur pour réaliser un blocage avec l'os maxillaire.

Dans le cas de l'implant selon le brevet EP-A-0 256 708, qui constitue un état de la technique selon l'Art. 54(3)(4), le fut est prolongé vers le bas par une paroi cylindrique, ce qui pose des problèmes de fabrication particuliers et des problèmes de mise en place spécifique pour obtenir la reconstitution de l'os maxillaire et sa coopération en blocage de cette paroi cylindrique.

Dans les trois cas, le fut de ces implants n'est pas enfoui complètement mais partiellement à l'air libre avec les inconvénients mentionnés plus haut.

Le brevet GB 1.278.967 décrit un implant constitué de lames en croix portant un fut sur lequel sera fixée une prothèse. Les lames de cet implant sont destinées à pénétrer dans l'os maxillaire par impact ou pression, le fut restant extérieur à l'os maxillaire avec pour conséquence, les inconvénients mentionnés plus haut des implants non enfouis pendant la période de cicatrisation osseuse.

L'état de la technique connue a également permis de relever le brevet EP 136 532.

Ce brevet décrit un implant constitué d'un fut destiné à se loger dans un puit foré dans l'os maxillaire.

Il n'est pas évident que ce fut soit destiné à être complètement enfoui pendant la période de cicatrisation osseuse.

Ce fut est doté d'ailes radiales qui contribuent à son blocage.

Cela suppose pour sa mise en place dans l'os maxillaire une double opération :
- d'une part un perçage d'un puit pour le passage du fut,
- d'autre part une entaille transversale au dit perçage pour le passage des ailettes.

Cette double opération affaiblit l'os maxillaire.

L'invention vise à obvier aux inconvénients ci-dessus énoncés de la technique antérieure.

L'invention vise à obtenir, après cicatrisation osseuse, un contact direct entre l'os et l'implant sans interposition de tissu cicatriciel de façon à assurer un blocage et un clavetage osseux de l'implant dans toutes les directions.

L'invention vise également à réaliser un implant qui selon certaines de ses formes de réalisation soit apte à solutionner tous les cas d'édentation.

A cet effet, l'implant selon l'invention est constitué d'un corps cylindrique destiné à être placé dans un puit foré dans la paroi osseuse après ouverture de la gencive.

Le corps cylindrique est doté d'un logement axial destiné à recevoir une pièce d'obturation après la pose de l'implant et avant fermeture de la gencive pendant une certaine période dite de mise en nourrice au cours de laquelle s'effectue la cicatrisation osseuse, le dit logement axial recevant après réouverture de la gencive et enlèvement de la pièce d'obturation un moignon qui portera la prothèse.

L'implant selon l'invention se caractérise en ce qu'il est doté à la partie inférieure de son corps cylindrique et dans le prolongement axial de celui-ci de au moins une paroi axiale, mince et non-cylindrique de largeur égale au diamètre de l'implant, la dite paroi étant ajourée.

Suivant une autre caractéristique de l'invention, la paroi à la base de l'implant est arrondie en arc-de-cercle.

Suivant une autre caractéristique de l'invention, le corps de l'implant est doté à sa base de au moins deux parois ajourées sécantes à angle droit.

D'autres avantages et caractéristiques de l'invention apparaîtront à la lecture de la description ci-après d'une forme de réalisation de l'invention donnée à titre d'exemple non limitatif et illustrée par les dessins joints dans lesquels :
- la figure 1 est une vue de l'implant selon une forme de réalisation,
- la figure 2 est la représentation d'une autre forme de réalisation de l'invention,
- la figure 3 est une vue d'une autre forme de réalisation de l'implant avec représentation annexe de dessous,
- les figures 4 et 5 sont des vues de l'implant en position,
- la figure 6 est une vue de l'implant en position sur un appareillage permettant sa torsion,
- la figure 7 est une vue de l'implant en position normale.

Tel que représenté aux dessins annexés, l'implant selon l'invention est constitué d'un corps 1 de forme cylindrique, de préférence réalisé en un matériau biocompatible tel que du titane.

Il va de soi que tout autre type de matériau adapté peut être utilisé.

Le corps 1 est doté d'un logement borgne axial 2 destiné à recevoir une pièce d'obturation 3.

De préférence, le logement 1 est pourvu d'un orifice 4 de diamètre supérieur à celui du logement qui constitue un épaulement de blocage de la pièce d'obturation.

Selon une forme préférentielle mais non limitative de réalisation de l'invention, le logement est pourvu d'un filetage et la pièce d'obturation 3 est une vis de longueur égale ou inférieure à celle du logement dont la tête 5 se loge dans l'orifice 4 sur l'épaulement.

La surface de la paroi externe du corps 1 est dotée d'une pluralité de creux et de reliefs destinés à accroître la surface de contact entre l'os et le corps.

Selon une forme préférée de réalisation, les creux et reliefs sont obtenus en ménageant sur la paroi externe du corps une succession de sillons 6 ou cannelures horizontales régulièrement espacées.

A la base du corps 1 sous celui-ci est disposée au moins une paroi mince 7 dont la largeur est égale au diamètre du corps 1.

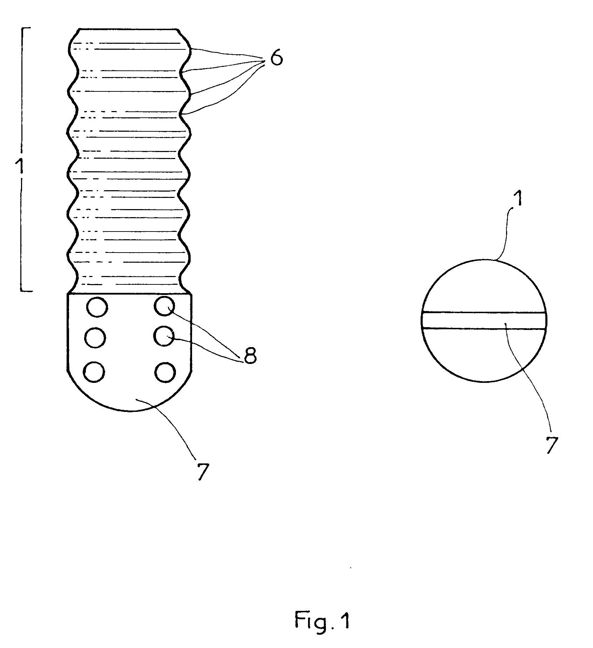

La paroi 7 est dans l'exemple de réalisation de l'invention une paroi plane disposée suivant le diamètre du corps 1 (figure 1).

Cependant, sans sortir du cadre de l'invention, la paroi peut avoir toute autre forme adaptée à l'exception d'une forme cylindrique.

La paroi 7 est dotée d'un ou de plusieurs perçages 8 qui, lors de la reconstitution de la masse osseuse, seront occupés par l'os en réalisant un enclavement de la paroi.

Les perçages 8 peuvent présenter toutes formes par exemple circulaire (figures 1, 2 et 3) ou bien oblongue.

Comme représentée aux dessins annexés, l'extrémité inférieure de la paroi 7 est de préférence arrondie en arc-de-cercle ou en arc de courbe.

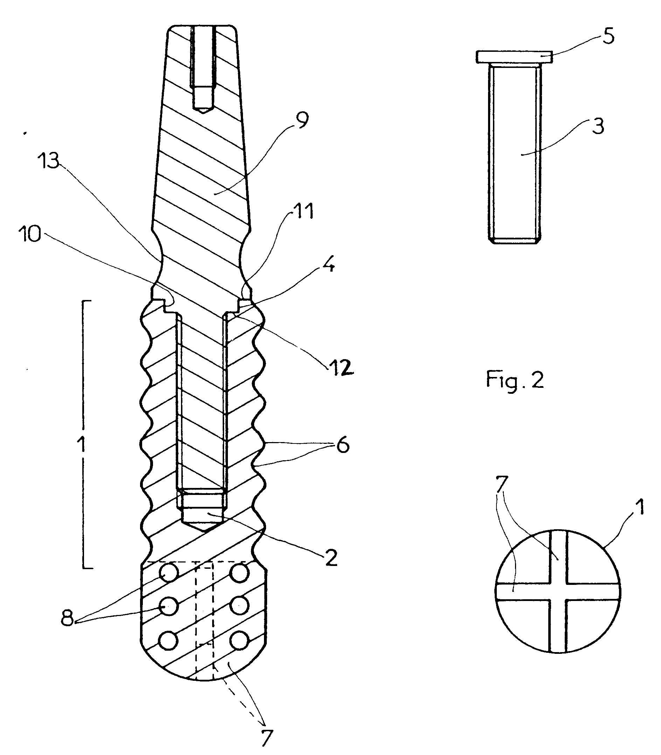

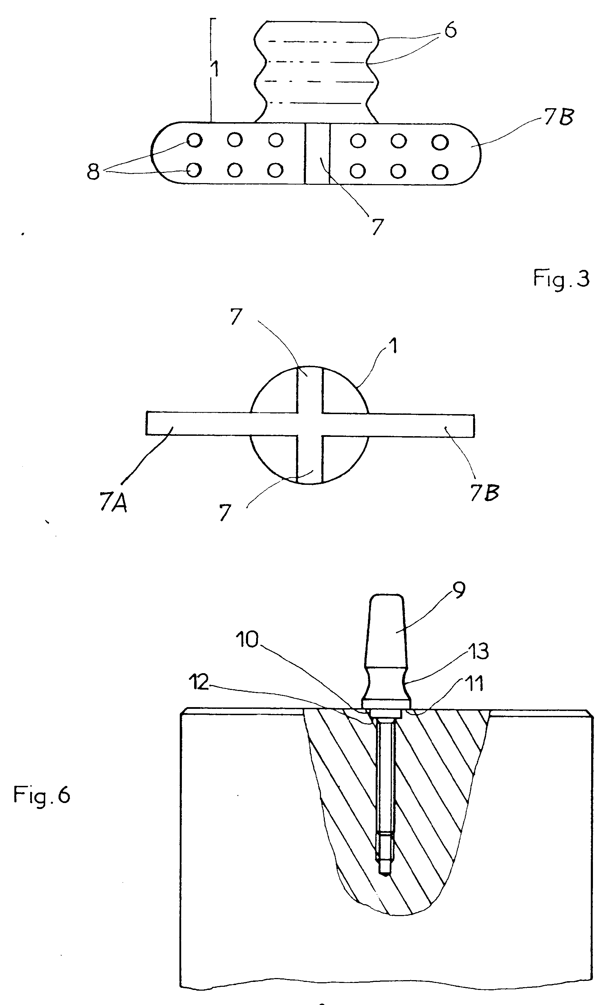

Suivant une forme préférée de réalisation de l'invention sous le corps 1 sont disposées au moins deux parois 7 suivant deux diamètres du corps 1 et qui sont sécantes entre elles suivant un angle droit leur conférant un aspect cruciforme (figures 2 et 3).

Les parois 7 ont, dans l'exemple de réalisation représenté aux figures 1 et 2, une hauteur inférieure à celle du corps 1.

Ce mode de réalisation correspond au cas d'implants destinés à être placés dans les régions antérieures du maxillaire où la hauteur osseuse est importante.

Cependant, en cas d'obstacle, il est possible, soit d'utiliser un implant de plus petite dimension, plusieurs dimensions étant réalisées, soit de réduire l'implant en meulant la ou les parois minces 7.

Dans le cas où la hauteur osseuse utilisable est faible, régions postérieures des maxillaires, il est possible avec la forme de réalisation de l'implant représenté à la figure 3, de fixer une prothèse.

Dans ce cas de réalisation, le corps 1 de l'implant est de faible hauteur et présente deux parois inférieures 7 diamétrales ajourées à conformation cruciforme.

Une des parois 7 est de dimension supérieure au diamètre du corps en présentant deux ailettes 7A/7B.

Différentes hauteurs de corps et longueur d'ailettes sont prévues.

Dans le logement 2, après enlèvement de la vis d'obturation, est disposée la tige filetée d'un moignon 9 qui reçoit la prothèse.

Avantageusement, le moignon 9 a un diamètre correspondant à celui du corps 1.

Il présente à sa base dans le prolongement de sa tige filetée un retreint 10 de diamètre correspondant à celui de l'épaulement de l'orifice 4 dans lequel le dit retreint se loge au montage. La réalisation du retreint 10 ménage à la base du moignon deux surfaces d'appui concentriques et espacées dont une 11 supérieured'appui de la base du moignon sur le pourtour de l'orifice 4 du corps et dont l'autre 12 inférieure à la précédente et à distance de celle-ci sur l'épaulement interne de l'orifice 4.

Cette disposition de l'invention permet d'obtenir une bonne stabilité axiale du moignon par rapport au corps 1.

Au-dessus de la surface supérieure d'appui 11, le moignon est pourvu d'un retreint 13 qui en diminue l'épaisseur.

Cette diminution locale de l'épaisseur du moignon permet lors de l'adaptation de la prothèse d'effectuer sur le moignon une torsion au moyen d'une pince pour paralléliser l'axe du moignon implantaire avec l'axe des piliers voisins.

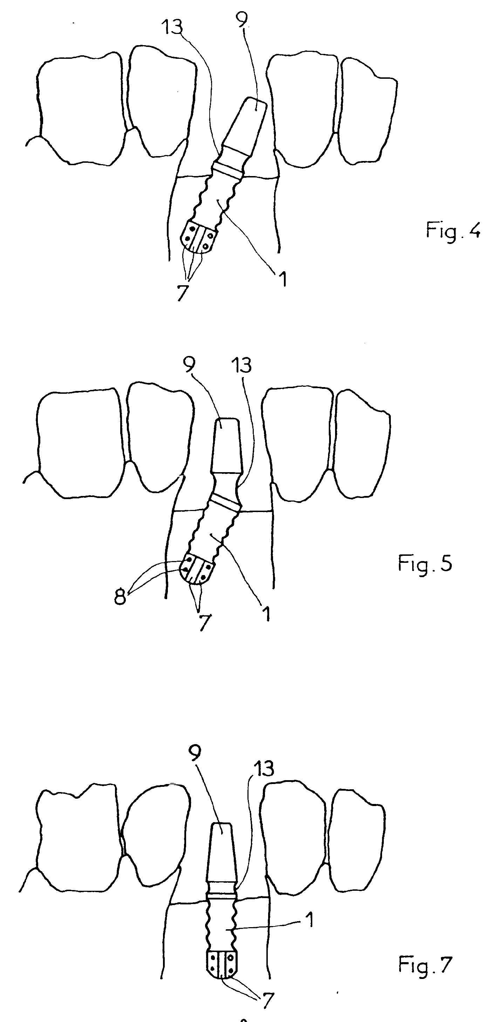

Ce cas de figure est représenté aux figures 4 et 5.

En figure 4 est représente un implant, corps 1 et moignon 9 que le praticien n'a pu placer dans l'axe des dents voisines en raison d'un obstacle anatomique.

Dans ce cas, pour parvenir à la configuration de la figure 5 où le moignon 9 es parallèle à l'axe des dents adjacentes, le moignon étant enlevé du corps, est vissé sur une masse (figure 6) présentant un perçage avec épaulement identique au logement du moignon.

Il est possible, le praticien ayant pris préalablement un repérage de tordre le moignon 9 autour de son retreint sans que ses surfaces d'appui changent de position.

Le moignon après la période de mise en nourrice, sera remis en place.

Il va de soi que l'implant peut être placé dans une position normale telle que représentée en figure 7, ce qui ne nécessite pas d'opération de torsion sur le moignon 9.

Dans l'exemple de réalisation de l'invention représentée aux dessins annexés, le moignon est de section circulaire mais il va de soi que sans sortir du cadre de l'invention, il peut être de toute autre section telle que par exemple polygonale.

La partie supérieure du moignon peut être dotée d'un perçage taraudé permettant la fixation de prothèses par vis.

La mise en place de l'implant s'effectue par forage d'un puit cylindrique de diamètre au plus égal à celui de l'implant après ouverture de la gencive avec éventuellement, des fentes latérales dans le cas des ailettes 7A.

L'implant est positionné en sorte que son orifice 4 affleure la crête osseuse.

Il est obturé au moyen de la vis 3 et la gencive est refermée.

Au terme d'une période de mise en nourrice, la gencive ayant été réouverte, la vis est remplacée par le moignon 9 qui reçoit la prothèse, soit par vis, soit par tout autre moyen connu.

Pendant la période de mise en nourrice, la masse osseuse va enserrer l'implant en réalisant la cicatrisation osseuse en contact direct avec l'implant et le clavetage osseux au niveau de la ou des parois ajourées.

L'implant selon l'invention peut être utilisé pour l'adaptation de tout type de prothèse comportant une ou plusieurs dents ou autre type de prothèses du corps humain ou animal tel que prothèse des oreilles ou du nez.

**Revendications**

1. Implant intraosseux constitué d'un corps cylindrique (1) destiné à être placé dans un puit foré dans la paroi osseuse après ouverture des tissus mous, le corps cylindrique étant doté d'un logement axial (2) destiné à recevoir une pièce d'obturation (3) après la pose de l'implant et avant la fermeture des tissus mous pendant unie certaine période au cours de laquelle s'effectue la cicatrisation osseuse, le dit logement axial recevant après réouverture des tissus mous et enlèvement de la pièce d'obturation un moignon (9) ou autre pièce qui portera la prothèse, le dit implant étant caractérisé en ce qu'il est doté à la partie inférieure de son corps cylindrique (1) et dans le prolongement axial de celui-ci de au moins une paroi (7) mince, axiale et non-cylindrique de largeur égale au diamètre de l'implant, la dite paroi (7) étant ajourée.

2. Implant selon la revendication 1 caractérisé en ce que la paroi (7) à la base de l'implant est arrondie en arc-de-cercle ou en arc-de-courbe.

3. Implant selon la revendication 1 caractérisé en ce qu'il est doté à sa base de au moins deux parois (7) ajourées sécantes à angle droit.

4. Implant selon la revendication 1 caractérisé en ce que la base du moignon (9) au-dessus de sa tige filetée présente un retreint (10) qui ménage deux surfaces d'appui concentriques et espacées (11), (12) du moignon sur le corps (1).

5. Implant selon la revendication 1 caractérisé en ce que le moignon est pourvu au-dessus de la surface d'appui supérieure (11) d'un retreint (13) qui en diminue l'épaisseur et permet par pliage de le paralléliser avant mise en place avec les piliers voisins.

## Claims

1. Bone implant comprising a cylindrical body (1) intended for placement inside a cavity drilled in the bone wall after an incision has been made in the soft tissue. Said cylindrical body has an axial counterbore (2) which is plugged by means of an obstructing element (3), after the implant is fitted and prior to closing the soft tissue, for a period of time during which the bone is left to heal. After reopening of the soft tissue and removal of the obstructing element, a stub (9) or other device carrying the prosthesis is inserted into said axial counterbore. Said implant is specific in that the lower end of the cylindrical body (1) is extended lengthwise by at least one thin, non-cylindrical wall (7) whose diameter is equal to the diameter of the implant. Said wall (7) carries several apertures.

2. Implant as specified in claim 1 wherein the extending wall (7) at the base on the implant is rounded off into an arc of a circle or an arc of a curve.

3. Implant as specified in claim 1 wherein the base of said implant has at least two perforated walls (7) intersecting at right angles.

4. Implant as specified in claim 1 wherein the base of the stub (9) has a contraction in area (10) above the threaded stem which has two concentric, spaced bearing surfaces (11) and (12) between the stub and the body (1).

5. Implant as specified in claim 1 wherein the stub has a restricted neck (13) above the upper bearing surface (11) which diminishes the diameter of said stub and allows for bending until parallel with the surrounding teeth prior to mounting the prosthesis.

## Patentansprüche

1. In den Knochen einzufügender Einsatz, der aus einem zylinderförmigen Rumpfstück besteht (1) und nach einer Öffnung des weichen Gewebes in einen aufgebohrten Schacht in die Knochenwand gesetzt wird. Der zylinderförmige Körper ist mit einem axialen Verlängerungsstück versehen (2), in das nach dem Einfügen des Einsatzes und vor dem Schließen des weichen Gewebes ein Verschlußstück (3) eingesetzt wird, und dies während einer bestimmten Zeitraums, innerhalb dessen die Knochenheilung stattfindet. In das besagte axiale Verlängerungsstück wird nach dem erneuten Öffnen des weichen Gewebes und nach dem Entfernen des Verschlußstückes ein Stumpf (9), bzw. ein entsprechendes Element eingesetzt, der die Prothese trägt. Der besagte Einsatz ist am unteren Abschnitt seines zylinderförmigen Rumpfstückes (1) und an dessen axialen Verlängerung mit mindestens einer dünnen, axialen und nicht zylinderförmigen Seitenwand (7) versehen, deren Breite dem Durchmesser des Einsatzes entspricht. Die besagte Seitenwand (7) ist durchbrochen.

2. Der unter Patentanspruch 1 beschriebene Einsatz kennzeichnet sich dadurch aus, daß die Seitenwand (7) am unteren Ende des Einsatzes kreisbogenförmig kurvenbogenförmig abgerundet ist.

3. Der unter Patentanspruch 1 beschriebene Einsatz kennzeichnet sich dadurch aus, daß er an seinem unteren Ende mit mindestens zwei durchbrochenen Seitenwänden (7) versehen ist, die sich im rechten Winkel schneiden.

4. Der unter Patentanspruch 1 beschriebene Einsatz kennzeichnet sich dadurch aus, daß das unterre Ende des Stumpfes (9) oberhalb der Schraubenspindel eine Einschnürung (10) aufweist, welche zwei konzentrische, in einem bestimmten Abstand zueinander stehende Auflageflächen (11), (12) zwischen Stumpf und Rumpfstück (1) ausspart.

5. Der unter Patentanspruch 1 beschriebene Einsatz kennzeichnet sich dadurch aus, daß der Stumpf über der oberen Auflagefläche (11) mit einer Einschnürung (13) versehen ist, die dessen Dicke vermindert und durch deren Biegen eine parallele Ausrichtung vor dem Instellungbringen mit den benachbarten Zähnen ermöglicht wird.

Fig. 1

Fig. 2

6

1

7B

8

7

Fig. 3

7

1

7A

7

7B

9

10

13

12

11

Fig. 6

EP 0 278 887 B1

Fig. 4

Fig. 5

Fig. 7

9